**Europäisches Patentamt**

**European Patent Office**

**Office européen des brevets**

(19)

(11) Veröffentlichungsnummer : **0 511 934 A1**

# (12) EUROPÄISCHE PATENTANMELDUNG

(21) Anmeldenummer : **92610030.6**

(22) Anmeldetag : **27.04.92**

(51) Int. Cl.⁵ : **F16L 55/18,** E03F 7/00, F16L 55/26

(30) Priorität : **27.04.91 DE 9105211 U**

(43) Veröffentlichungstag der Anmeldung :
**04.11.92 Patentblatt 92/45**

(84) Benannte Vertragsstaaten :
**AT BE CH DE DK ES FR GB IT LI LU MC NL PT SE**

(71) Anmelder : **FYNS KLOAKSERVICE ApS
Fabriksvej 3
DK-5580 Nörre Aaby (DK)**

(72) Erfinder : **Knudsen, Vagn Orry
Laesovej 19
DK-5466 Asperup (DK)**
Erfinder : **Knudsen, Hans Erik
Lundevej 14
DK-5580 Norre Aaby (DK)**

(74) Vertreter : **Larsen, Hans Ole et al
Larsen & Birkeholm ApS Europaeisk
Patentbureau P.O. Box 200
DK-2630 Taastrup (DK)**

(54) **Gerät zur Inspektion von Rohrleitungen.**

(57)   Die Erfindung betrifft ein Gerät zur Inspektion von Rohrleitungen, insbesondere von Kanalisationsrohren mit einer mit Übertragungskabel (2) versehenen Fernsehkamera (10), die auf einem in der Rohrleitung verfahrbaren Wagen (1) mittels fernsteuer- und verstellbaren Halte- und Führungselementen gelagert und in bezug auf ihre Halte- und Führungselemente zu diesen selbst verstellbar angeordnet ist. Nach der Erfindung ist auf dem Wagen (1) dreh- und antreibbar eine vom steifen, aber biegsamen Übertragungskabel (2) durchgriffene Hohlwelle (3) gelagert. Vortriebsseitig ist vor dem Hohlwellenlager (4) an der Hohlwelle (3), aber in Distanz vor deren freiem Ende (5) schwenkbar ein Kamerahalter (6) mit an der Hohlwelle (3) sitzendem Verstellantrieb (7) angeordnet. Zwischen dem freien Ende (5) der Hohlwelle (3) und dem Kamerahalter (6) sind ebenfalls an der Hohlwelle (3) befestigte, mit einem Antrieb (8) gekoppelte Übertragungskabelförderelemente (9) angeordnet. Dadurch ergibt sich ein hoher Schlankheitsgrad des Gerätes, und die Kamera (10) kann in der horizontalen Längsdrehachse des Gerätes angeordnet werden, wobei diese, ohne daß der auf dem Wagen befindliche eigentliche Träger verstellt werden muß, schwenkbar ist.

EP 0 511 934 A1

Die Neuerung betrifft ein Gerät zur Inspektion von Rohrleitungen gemäß Oberbegriff des Anspruches 1.

Ein derartiges Gerät ist nach der DE-OS 38 03 274 bekannt. Um bei Inspektionen von Kanalisationsrohren die Kamera auch in Abzweigleitungen einführen zu können, ist dieses Gerät derart ausgebildet, daß am in der Rohrleitung verfahrbaren Wagen im oberen Bereich ein um eine Horizontalachse verdrehbarer Träger gelagert ist, an dem ortsfeste Antriebselemente und um eine gemeinsame Achse schwenkbare Führungsmittel für die biegsame Welle angeordnet sind, wobei die Schwenkachse der Führungsmittel quer zur Drehachse des Trägers steht.

Die biegsame Welle, in der auch das Übertragungskabel verläuft, erstreckt sich, von den Führungsmitteln geführt, oberhalb des um die Horizontalachse verdrehbaren Trägers, d.h. außermittig zur Rohrleitungsachse. Um die biegsame Welle mit der daran befindlichen Kamera in eine Rohrabzweigung einschwenken zu können, ist auf dem Träger ein zusätzlicher, sogenannter Drehschemel mit den kameranahen Führungselementen angeordnet. Abgesehen von der dadurch bedingten aufwendigen Konstruktion und der außermittigen Führung der biegsamen Welle ist dieses Gerät ziemlich sperrig, wodurch die Winkeleinstellbarkeit der Kamera im Rücksicht auf die in der Regel vorliegenden beengten Raumverhältnisse in Rohrleitungen zwangsläufig eingeschränkt ist.

Der Neuerung liegt die Aufgabe zugrunde, das Gerät der gattungsgemäßen Art dahingehend zu verbessern, daß das Gerät bei vereinfachter Bauweise insgesamt schlanker ausgebildet und die Kamera selbst in der horizontalen Längsdrehachse des Gerätes anzuordnen sein soll, verbunden mit der Maßgabe, daß die Kamera schwenkbar sein soll, ohne daß dazu der auf dem Wagen (Rohrmobil) befindliche eigentliche Träger verstellt werden muß.

Diese Aufgabe ist mit einem Gerät der gattungsgemäßen Art nach der Neuerung durch die im Kennzeichen des Hauptanspruches angeführten Merkmale gelöst. Vorteilhafte Weiterbildungen ergeben sich nach den Unteransprüchen.

Bei dieser neuartigen Lösung sind konsequent alle wesentlichen Führungs-, Halte- und Winkeleinstellelemente um die vom Übertragungskabel repräsentierte Gerätelängsachse angeordnet, wodurch die Kamera, abgesehen von der schlanken Bauweise des ganzen Gerätes, in bezug auf die horizontale Längsachse um 360° gedreht und vertikal um 240° verschwenkt werden kann. Da die Übertragungskabelförderelemente unmittelbar vor dem vortriebsseitigen freien Ende der drehbaren Hohlwelle sitzen, die das Übertragungskabel selbst über ihre gesamte Länge führt, bedarf es nur eines Paares von Förderrollen, die vorteilhaft mit Kabelführungsnuten versehen sind, die zur Kabelaustrittsöffnung der Hohlwelle fluchten.

Der schwenkbare Kamerahalter ist vorteilhaft topfartig mit einer trichterförmigen Kameraaufnahmeöffnung versehen, wodurch sich die Kamera beim Rückzug in den Halter komplikationslos in diesen einziehen läßt.

Das neuartige Gerät und weitere vorteilhafte und praktische Ausführungsformen werden nachfolgend anhand der zeichnerischen Darstellung eines Ausführungsbeispieles näher erläutert.

Es zeigt schematisch

Fig. 1 eine Seitenansicht des in einer Rohrleitung befindlichen Gerätes und

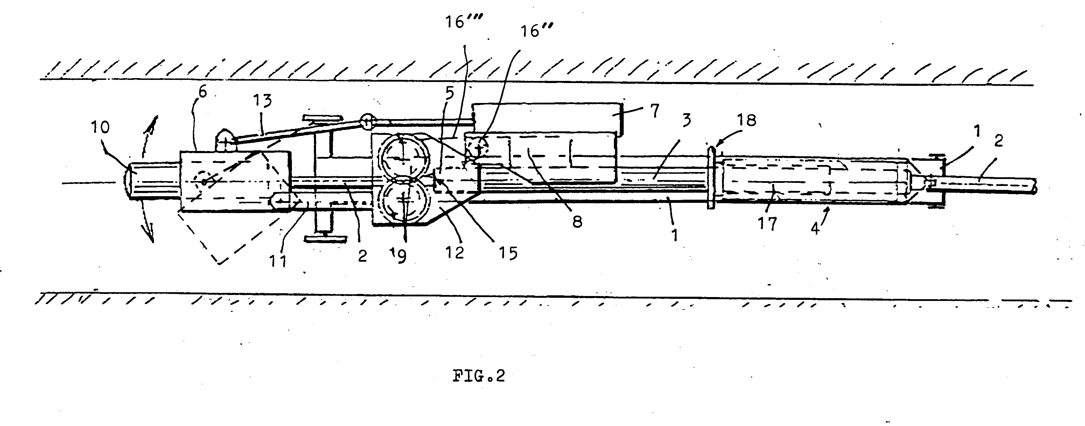

Fig. 2 eine Draufsicht auf das Gerät gemäß Fig. 1 in Pfeilrichtung A .

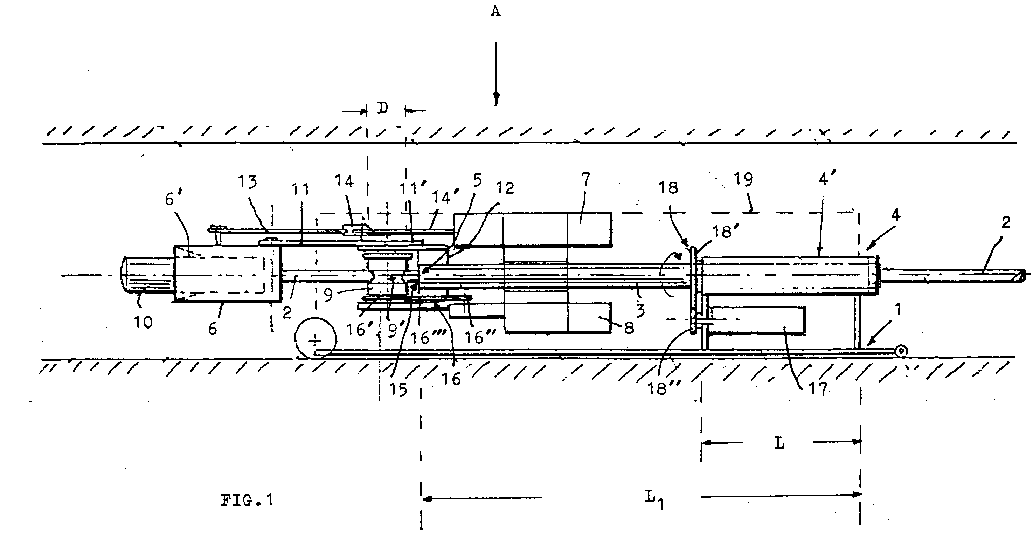

Das Gerät besteht aus einer mit Übertragungskabel 2 versehenen Fernsehkamera 10, die auf einem in der Rohrleitung verfahrbaren Wagen 1 mittels fernsteuer- und verstellbaren Halte- und Führungselementen gelagert und in bezug auf ihre Halte- und Führungselemente zu diesen selbst verstellbar angeordnet ist. Für dieses Gerät ist nun, und wie aus Fig. 1 ersichtlich, wesentlich, daß auf dem Wagen 1 dreh- und antreibbar eine vom steifen, aber biegsamen Übertragungskabel 2 durchgriffene Hohlwelle 3 gelagert und vortriebsseitig vor dem Hohlwellenlager 4 an der Hohlwelle 3, aber in Distanz vor deren freiem Ende 5 schwenkbar ein Kamerahalter 6 mit an der Hohlwelle 3 sitzendem Verstellantrieb 7 angeordnet ist, wobei zwischen dem freien Ende 5, der Hohlwelle 3 und dem Kamerahalter 6 ebenfalls an der Hohlwelle 3 befestigte, mit einem Antrieb 8 gekoppelte Übertragungskabelförderelemente 9 angeordnet sind.

Aus den erwähnten Gründen ist der Kamerahatler 6 topfartig mit einer trichterförmigen Kameraaufnahmeöffnung 6′ ausgebildet, wobei der Kamerahalter 6 schwenkbar an einem starren Verbindungssteg 11 gelagert und dieser fest mit seinem anderen Ende 11′ an der Lagerung 12 der Übertragungskabelförderelemente 9 befestigt und diese Lagerung 12 fest am freien Ende 5 der Hohlwelle 3 angeordnet ist. Der Verstellantrieb 7 ist mit dem Kamerahalter 6 über Stellglieder 13, 14, 14′ verbunden, wobei das Stellglied 14 einfach als Gelenk ausgebildet sein kann. Andere konstruktive Ausbildungen der Stellglieder zur Verschwenkung des Kamerahalters 6 sind ohne weiteres möglich.

Die Förderelemente 9 sind, wie dargestellt, aus zwei Rollen mit Kabelführungsnuten 9′ gebildet, die fluchtend zur Kabelaustrittsöffnung 15 der Hohlwelle 3 angeordnet sind.

In Rücksicht auf die Biegbarkeit und Beanspruchung des widerstandsfähig ummantelten Übertragungskabels 2 entspricht der Durchmesser D der Kabelführungsnuten 9′ einem Mehrfachen des Durchmessers des Übertragungskabels 2. Der Gesamtquerschnitt beider Nuten 9′ entspricht dabei dem Kabelquerschnitt, wobei beide Nuten 9′ bzw. beide Rollen mit einer für die Förderung des Kabels 2 ausreichenden Pressung am Übertragungskabel 2 anliegen. Eines der Förderelemente 9 bzw. eine der Rollen steht durch das Übertragungsglied 16 mit dem Antrieb 8 (Stellmotor) in Verbindung. Wie im Ausführungsbeispiel dargestellt, ist dafür die betreffende Rolle mit einem Kettenritzel 16′ und der Antrieb 8 mit einem Kettenritzel 16″ versehen, zwischen denen eine umlaufende Kette 16‴ verspannt ist.

Das Hohlwellenlager 4 ist in Form eines Lagergehäuses 4′ mit einer Länge L ausgebildet, die etwa einem Drittel der Gesamtlänge $L_1$ der Hohlwelle 3 entspricht. Im bzw. unter dem Lagergehäuse 4′ ist der Hohlwellenantrieb 17 (Stellmotor) angeordnet, der über einen Ritzeltrieb 18 mit der Hohlwelle 3 gekoppelt ist, d.h., unmittelbar am Austritt der Hohlwelle 3 aus dem Lagergehäuse 4′ ist auf der Hohlwelle 3 fest ein Ritzel 18′ angeordnet, das mit dem Ritzel 18″ auf der Motorwelle kämmt, so daß mit dem Antrieb 17 die Hohlwelle 3 gedreht werden kann. Bei Drehung der Hohlwelle drehen sich sämtliche mit dieser direkt oder indirekt fest verbundenen Elemente mit, d.h., die beiden Antriebe 7, 8, der Förderrollenhalter 12 mit dem Verbindungssteg 11 und der an diesem schwenkbar angeordnete Kamerahalter 6, der mittels des ebenfalls fernsteuerbaren Antriebs 7 via Stellglieder 13, 14, 14′ verschwenkt werden kann.

Da das ganze Gerät außerordentlich schlank und kompakt ist und sich der schwenkbare Kamerahalter 6 exponiert am vortriebsseitigen Ende des Gerätes befindet, kann vorteilhaft auf dem Wagen 1 eine im wesentlichen alle Elemente überdeckende Haube 19, wie gestrichelt angedeutet, angeordnet werden.

**Patentansprüche**

1. Gerät zur Inspektion von Rohrleitungen, insbesondere von Kanalisationsrohren mit einer mit Übertragungskabel (2) versehenen Fernsehkamera (10), die auf einem in der Rohrleitung verfahrbaren Wagen mittels fernsteuer- und verstellbaren Halte- und Führungselementen gelagert und in bezug auf ihre Malte- und Führungselemente zu diesen selbst verstellbar angeordnet ist,
dadurch gekennzeichnet,
daß auf dem Wagen (1) dreh- und antreibbar eine vom steifen, aber biegsamen Übertragungskabel (2) durchgriffene Hohlwelle (3) gelagert und vortriebsseitig vor dem Hohlwellenlager (4) an der Hohlwelle (3), aber in Distanz vor deren freiem ende (5) schwenkbar ein Kamerahalter (6) mit an der Hohlwelle (3) sitzendem Verstellantrieb (7) angeordnet ist, wobei zwischen dem freien ende (5) der Hohlwelle (3) und dem Kamerahalter (6) ebenfalls an der Hohlwelle (3) befestigte, mit einem Antrieb (8) gekoppelte Übertragungskabelförderelemente (9) angeordnet sind.

2. Gerät nach Anspruch 1,
dadurch gekennzeichnet,
daß der Kamerahalter (6) topfartig mit einer trichterförmigen Kameraaufnahmeöffnung (6′) ausgebildet ist.

3. Gerät nach Anspruch 1 oder 2,
dadurch gekennzeichnet,
daß der Kamerahalter (6) schwenkbar an mindestens einem Verbindungssteg (11) gelagert und dieser fest mit seinem anderen ende (11′) an einer Lagerung (12) der Übertragungskabelförderelemente (9) und diese Lagerung (12) fest am freien ende (5) der Hohlwelle (3) angeordnet ist.

4. Gerät nach Anspruch 3,
dadurch gekennzeichnet,
daß der Verstellantrieb (7) mit dem Kamerahalter (6) über Stellglieder (13, 14, 14′) verbunden ist.

5. Gerät nach einem der Ansprüche 1 bis 4,
dadurch gekennzeichnet,
daß die Übertragungskabelförderelemente (9) aus zwei Rollen mit Kabelführungsnuten (9′) gebildet und diese Nuten fluchtend zur Kabelaustrittsöffnung (15) der Hohlwelle (3) angeordnet sind.

6. Gerät nach Anspruch 5,
dadurch gekennzeichnet,
daß der Durchmesser (D) der Kabelführungsnuten (9′) einem Mehrfachen des Durchmessers des Übertragungskabels (2) entspricht.

7. Gerät nach Anspruch 5,
dadurch gekennzeichnet,
daß eines der Förderelemente (9) mit einem Übertragungsglied (16), wie Kettentrieb, mit dem Antrieb (8) verbunden ist.

8. Gerät nach einem der Ansprüche 1 bis 7,
dadurch gekennzeichnet,
daß das Hohlwellenlager (4) in Form eines Lagergehäuses (4′) mit einer Länge (L) ausgebildet ist, die mindestens einem Drittel der Gesamtlänge $(L_1)$ der Hohlwelle (3) entspricht.

9. Gerät nach Anspruch 8,
dadurch gekennzeichnet,
daß im Lagergehäuse (4′) der Hohlwellenantrieb (17) angeordnet und dieser über einen Ritzeltrieb (18) mit der Hohlwelle (3) gekoppelt ist.

10. Gerät nach einem der Ansprüche 1 bis 9,
dadurch gekennzeichnet,
daß sämtliche auf dem Wagen (1) angeordneten Element bis auf den schwenkbaren Kamerahalter (6) mit einer Haube (19) abgedeckt sind.

FIG.1

4

FIG.2

Europäisches
Patentamt

# EUROPÄISCHER RECHERCHENBERICHT

Nummer der Anmeldung

EP    92 61 0030

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | GB-A-2 093 380 (INSITUFORM LIMITED)<br>* Abbildungen *<br>--- | 1,3,4 | F16L55/18<br>E03F7/00<br>F16L55/26 |
| A | DE-A-3 602 281 (K. ZAWISLA)<br>* Abbildungen 2-4 *<br>--- | 1 | |
| A | EP-A-0 365 921 (H. SCHLICK GMBH.)<br>* das ganze Dokument *<br>----- | – | |

RECHERCHIERTE SACHGEBIETE (Int. Cl.5 )

F16L
E03F

Der vorliegende Recherchenbericht wurde für alle Patentansprüche erstellt

| Recherchenort | Abschlußdatum der Recherche | Prüfer |
|---|---|---|
| DEN HAAG | 04 AUGUST 1992 | BUDTZ-OLSEN A. |

### KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus andern Gründen angeführtes Dokument
.............................................................................
& : Mitglied der gleichen Patentfamilie, übereinstimmendes
   Dokument

EPO FORM 1503 03.82 (P0403)